# EUROPEAN PATENT APPLICATION

(11) **EP 4 306 602 A1**
(43) Date of publication of application: **17.01.2024**
(21) Application number: 22767007.2
(22) Date of filing: 04.03.2022
(51) Int. Cl.: C09D 127/12, B05D 7/24, B32B 15/082, C09D 5/00, C09D 5/03, C09D 181/06

(54) **POWDERY PRIMER COMPOSITION**

(30) Priority: 09.03.2021 JP 2021037540
(71) Applicant: DAIKIN INDUSTRIES, LTD., Osaka 530-0001 (JP)
(72) Inventor: NAKATANI, Yasukazu, Osaka-shi, Osaka 530-8323 (JP); IMADA, Hirotake, Osaka-shi, Osaka 530-8323 (JP)
(74) Representative: Goddar, Heinz J.
(86) International application number: PCT/JP2022/009284
(87) International publication number: WO 2022/191049

(57) **Abstract**

The present disclosure provides a powdery primer composition capable of inhibiting blisters from occurring in a laminated coating film.

A powdery primer composition, comprising a meltable fluororesin powder having an average particle size of 5 to 100 µm; and polyethersulfone powder, wherein the weight ratio between the meltable fluororesin powder and the polyethersulfone powder is 50:50 to 95:5.

## Description

### Technical Field

The present disclosure relates to a powdery primer composition.

### Background Art

In general, a fluororesin, particularly a perfluoropolymer has been widely used as a coating material for a corrosion-resistant lining in chemical factories and semiconductor factories, taking advantage of the excellent heat resistance, chemical resistance, flame retardance or the like of the fluororesin.
However, since the perfluoropolymer is poor in adhesion to a metal, a primer layer excellent in adhesion to a metal substrate has been, in many cases, provided on the surface of the metal substrate as an undercoat layer for the topcoat layer formed of the perfluoropolymer.

Various type of primers which adhere various metal substrates to a topcoat layer of 50 µm or more in thickness comprising a meltable perfluoropolymer, such as tetrafluoroethylene/perfluoroalkyl vinyl ether copolymer (PFA) particles or a tetrafluoroethylene/hexafluoropropylene copolymer (FEP) particles as a main component has been conventionally known. Examples of the primer include a primer comprising an organic solvent as a dispersion medium and a primer in powder form containing an amide-based resin as a main component of a binder resin.

Patent Literature 1 discloses a liquid coating material composition comprising an amide group-containing polymer compound (A), an antioxidant substance (B) and a fluororesin (C). Specifically, it discloses an organic solvent-based primer composition with a polyamideimide.

Patent Literature 2 discloses a primer composition obtained by blending, at a specific ratio, a polymer material that is an amideimide resin, an imide resin, an etherimide resin or a polyethersulfone resin; and a meltable fluororesin having an average particle size of 5 to 30 µm.

Patent Literature 3 discloses a powdery primer composition comprising a polymer compound (A) having an amide group and/or an imide group; an antioxidant substance (B); and a fluororesin (C).

### Citation List

### Patent Literature

Patent Literature 1: International Publication No. 2004/048489
Patent Literature 2: Japanese Patent Laid-Open No. 2008-45140
Patent Literature 3: International Publication No. 2009/119493

### Summary of Invention

### Technical Problem

An object of the present disclosure is to provide a powdery primer composition capable of inhibiting blisters from occurring in a laminated film comprising a perfluoropolymer layer.

### Solution to Problem

The present disclosure is a powdery primer composition, comprising a meltable fluororesin powder having an average particle size of 5 to 100 µm; and polyethersulfone powder, wherein the weight ratio between the meltable fluororesin powder and the polyethersulfone powder is 50:50 to 95:5.

The meltable fluororesin preferably has a melt flow rate of 0.1 to 50 g/10 min.

The meltable fluororesin is preferably a perfluoropolymer.

The present disclosure is also a primer film formed from the above-described powdery primer composition.

The present disclosure is also a laminate that has a film comprising a meltable perfluoropolymer provided on the above-described primer film.

The present disclosure is also a coated article having the above-described laminate provided on a metal substrate.

The present disclosure is also a coated article having the above-described laminate provided on the inner surface of a metal substrate, wherein the metal substrate is piping, a pipe or a duct.

### Advantageous Effects of Invention

The present disclosure can provide a powdery primer composition capable of inhibiting blisters from occurring in a laminated coating film. Therefore, the present disclosure enables the meltable perfluoropolymer film to have a longer service life.

### Description of Embodiments

The present invention will be described in detail below.

The powdery primer composition of the present disclosure comprises a meltable fluororesin powder having an average particle size of 5 to 100 µm; and polyethersulfone powder, and is characterized by that the weight ratio between the meltable fluororesin powder and the polyethersulfone powder is 50:50 to 95:5.

When a primer composition is used as a liquid primer, the liquid primer is desirably a water-based primer. However, a primer composition comprising water as a dispersion medium has a problem with dispersion stability of meltable fluororesin particles. On the other hand, a powdery primer composition comprising a powder of an amide-based resin or an imide-based resin as a main component of a binder resin has a problem that blisters easily occur in a laminated coating film on which a topcoat layer is coated.

The present disclosure has found that the use of PES powder as a binder resin can inhibit blisters for occurring. A blister is blistering in a laminated coating film that occurs due to moisture such as water vapor penetrating into the laminated coating film when the adhesion of the laminated coating film is not sufficient, or the like. However, PES is excellent in melt flowability and easily ensures a high adhesion to a metal substrate, and the water permeability thereof thereby is reduced, so that blisters can be inhibited from occurring.

As described above, the powdery primer composition of the present disclosure uses polyethersulfone (PES) powder as a heat-resistant resin powder.

The PES is a resin formed of a polymer having a repeating unit represented by the following general formula:

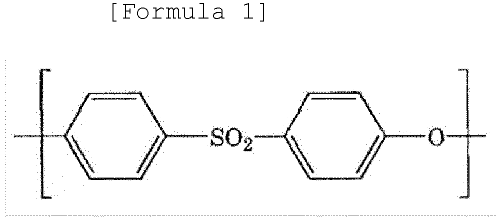

The PES is not limited, and may be preferably those obtained by polycondensation of a dihalodiphenyl compound and a dihydric phenol compound, or those obtained by polycondensation of an alkali metal disalt of a dihydric phenol and a dihalodiphenyl compound.

Examples of the dihalodiphenyl compound include a dihalodiphenyl compound having a sulfone group, such as dihalodiphenyl sulfones such as 4,4'-dichlorodiphenyl sulfone and 4,4'-difluorodiphenyl sulfone; bis(halogenophenylsulfonyl)benzenes such as 1,4-bis(4-chlorophenylsulfonyl)benzene and 1,4-bis(4-fluorophenylsulfonyl)benzene; and bis(halogenophenylsulfonyl)biphenyls such as 4,4'-bis(4-chlorophenylsulfonyl)biphenyl and 4,4'-bis(4-fluorophenylsulfonyl)biphenyl. Among others, the dihalodiphenyl compound is preferably dihalodiphenylsulfones, more preferably 4,4'-dichlorodiphenylsulfone or 4,4'-difluorodiphenylsulfone, and particularly preferably 4,4'-dichlorodiphenylsulfone, from the viewpoint of its easy availability. These dihalodiphenyl compounds can also be used in combination of two or more.

Examples of the dihydric phenol compound include hydroquinone, catechol, resorcin and 4,4'-biphenol, as well as bis(4-hydroxyphenyl)alkanes such as 2,2-bis(4-hydroxyphenyl)propane, 2,2-bis(4-hydroxyphenyl)methane and 2,2-bis(4-hydroxyphenyl)ethane; dihydroxydiphenyl sulfones such as 4,4'-dihydroxydiphenyl sulfone; dihydroxydiphenyl ethers such as 4,4'-dihydroxydiphenyl ether; and those having at least one hydrogen atom on the benzene ring thereof substituted with a lower alkyl group such as a methyl group, an ethyl group or a propyl group; a lower alkoxy group such as a methoxy group, an ethoxy group or a propoxy group; or a halogen atom such as a chlorine atom, a bromine atom or a fluorine atom. The dihydric phenol compound is preferably hydroquinone, 4,4'-biphenol, 2,2-bis(4-hydroxyphenylpropane), 4,4'-dihydroxydiphenyl ether or 4,4'-dihydroxydiphenyl sulfone, and particularly preferably 4,4'-dihydroxydiphenyl sulfone, from the viewpoint of its price and availability. These dihydric phenol compounds can also be used in combination of two or more.

The PES used in the present disclosure is preferably those obtained by polycondensation of a dihydric phenol compound and a dihalodiphenyl sulfone compound in substantially equimolar amounts.

The average particle size of the PES powder is preferably 0.1 to 50 µm and more preferably 1 to 30 µm. When the average particle size of the PES particles is within this range, both adhesion to a metal substrate and coatability can be achieved.

The average particle size is a value as measured by a laser diffraction method. Specifically, it is a volume median particle size as measured with a particle size distribution measuring device [trade name: Microtrac MT-3300II].

Examples of the meltable fluororesin used in the present disclosure include those obtained by polymerizing, as a monomer component, one or two or more of: chlorofluorovinyl monomers such as chlorotrifluoroethylene; fluorovinyl monomers such as trifluoroethylene; and perfluoromonomers such as tetrafluoroethylene, hexafluoropropylene and perfluoro(alkyl vinyl ether). The monomer component may further comprise one or two or more of vinyl monomers such as ethylene and propylene. The perfluoromonomer has a main chain composed of carbon atoms and fluorine atoms and optionally oxygen atoms, does not have CH or CH₂, and include a perfluorovinyl monomer and a perfluoro(alkyl vinyl ether) monomer. The oxygen atom is usually an ether oxygen.

The meltable fluororesin may be those obtained by copolymerizing the above-described monomer component(s) with a small amount of a comonomer such as a monomer having such a functional group such as a hydroxyl group or a carbonyl group or a monomer having a cyclic structure. Examples of the monomer having a cyclic structure include those having a cyclic ether structure such a cyclic acetal structure, and preferably those in which at least two carbon atoms constituting the cyclic ether structure constitute part of the main chain of the meltable fluororesin.

Examples of the meltable fluororesin include alkylene/fluoroalkylene copolymers such as an ethylene/tetrafluoroethylene copolymer [ETFE], an ethylene/chlorotrifluoroethylene copolymer and a propylene/tetrafluoroethylene copolymer; and perfluoropolymers such as a tetrafluoroethylene/hexafluoropropylene copolymer [FEP] and a tetrafluoroethylene/perfluoro(alkyl vinyl ether) copolymer [PFA]. The perfluoropolymer has the above-described perfluoromonomer as a monomer component.

The meltable fluororesin varies depending on its application, but it is preferably the above-described perfluoropolymer. The perfluoropolymer is more preferably those obtained by copolymerizing tetrafluoroethylene as a comonomer with the above-described perfluoromonomer as another comonomer that is not limited. In particular, FEP or PFA is preferable in that preferable results can be obtained for both adhesion to a metal as a substrate and interlayer adhesion thereof to a perfluoropolymer film as a topcoat layer or a laminated perfluoropolymer film.

The meltable fluororesin is necessary to be meltable. When the meltable fluororesin is meltable, it can be molten by baking, which is described later, to form a film.

The meltability of the meltable fluororesin is generally expressed by MFR as an index of flowability. The MFR refers to the weight of the resin extruded from a nozzle of 2 mm in diameter under a load of 5 kg for 10 minutes in accordance with ASTM D3159. The MFR is measured at 372°C when the meltable fluororesin is a perfluoropolymer such as PFA or FEP and at 297°C when it is ETFE.

The MFR of the meltable fluororesin is preferably 0.1 to 50 g/10 min.

When the melt flow rate is within the above range, the adhesion between the resulting primer film and the meltable perfluoropolymer film is further improved due to the flow characteristics of the meltable fluororesin.

In particular, the MFR of the above-described perfluoropolymer is preferably 1 to 40 g/10 min. The lower limit of the MFR is more preferably 10 g/10 min, and the upper limit of the MFR is more preferably 30 g/10 minutes.

When the melt flow rate is within this range, both interlayer adhesion and corrosion resistance can be achieved.

The meltable fluororesin can have a melt flow rate within the above range by adjusting the above-described molecular weight thereof.

The above-described meltable fluororesin powder has an average particle size of 5-100 µm. If the average particle size is out of this range, the coatability and coating efficiency may decrease. In addition, it may be difficult to inhibit blisters from occurring. The lower limit of the average particle size is preferably 10 µm, more preferably 15 µm, and even more preferably 20 µm. The upper limit of the average particle size is preferably 90 µm.

The average particle size is a value as measured by a laser diffraction method. Specifically, it is a volume median particle size as measured with a particle size distribution measuring device [trade name: Microtrac MT-3300II].

The method for producing the meltable fluororesin powder is not limited, and for example, the meltable fluororesin can be obtained by copolymerization using any conventionally known polymerization method such as an emulsion polymerization. The meltable fluororesin obtained by copolymerization is optionally milled so as to provide a meltable fluororesin powder having an average particle size within the above-described range. The milling method is not limited, and can, for example, be any conventionally known method. Examples of the milling method include a method comprising compressing the meltable fluororesin dry powder obtained by the emulsion polymerization method into a sheet with rolls, milling it with a mill to obtain particles, and classifying them.

The solid content mass ratio between the meltable fluororesin powder and the polyethersulfone powder is 50:50 to 95:5. If the content of the meltable fluororesin powder is too small, the adhesion between the resulting primer film and the meltable fluororesin film decreases, resulting in interlayer detachment, whereas if the content of the meltable fluororesin powder is too large, the adhesion between the primer film and an object to be coated decreases. The lower limit of the solid content mass ratio is preferably 70:30 and more preferably 76:24, and the upper limit is preferably 85:15.

The powdery primer composition of the present disclosure preferably further comprises at least one selected from metal salt powders such as barium sulfate and calcium carbonate. When these are contained in the powdery primer composition, blisters are further inhibited from occurring in the laminated coating film.

The average particle size of the metal salt powder is preferably 0.1 to 50 µm and more preferably 0.1 to 10 µm. When the average particle size of the heat-resistant resin particles is within this range, a high adhesion between an object to be coated and a topcoat layer comprising perfluoropolymer can be ensured.

The above-described average particle size is a value as measured by a laser diffraction method. Specifically, it is a volume median particle size as measured with a particle size distribution measuring device [trade name: Microtrac MT-3300II].

When the metal salt powder is contained in the powdery primer composition of the present disclosure, the content of the metal salt powder is preferably 1 to 20% by mass based on the solid content of the meltable fluororesin powder. The lower limit thereof is more preferably 3% by mass, and the upper limit thereof is more preferably 10% by mass.

The powdery primer composition of the present disclosure may further comprise a heat stabilizer. When the powdery primer composition of the present disclosure comprises the heat stabilizer, the powdery primer composition can prevent the meltable fluororesin powder from being oxidized due to heating or the like during formation of the meltable fluororesin coating film and can thereby reducing thermal deterioration, resulting in further improvement in adhesion stability.

The heat stabilizer is preferably an amine-type antioxidant and/or an organic sulfur-containing compound from the viewpoint of preventing oxidation of the meltable fluororesin powder.

Examples of the amine-type antioxidant include an aromatic amine having an aromatic hydrocarbon group such as a phenyl group or naphthyl group in its molecule, for example, phenylenediamine compounds such as N,N'-diphenyl-p-phenylenediamine, N,N'-di-2-naphthyl-p-phenylenediamine and a reaction product of diphenylamine and diisobutylene; and other aromatic secondary amine compounds such as dinaphthylamine, phenyl-α-naphthylamine, phenyl-β-naphthylamine, 4,4'-bis(α,α'-dimethylbenzyl)diphenylamine, phenylcyclohexyl-p-phenylenediamine and styrenated diphenylamine.

Examples of the amine-type antioxidant include a benzotriazole-based compound having a chemical structure with benzotriazole as a basic skeleton, which may be in the form of a metal salt thereof. The benzotriazole-based compound is not limited, and examples thereof include benzotriazole, 2-(2-hydroxy-5-methylphenyl)benzotriazole and 2-(2-hydroxy-5-tetraoctylphenyl)benzotriazole.

Examples of the organic sulfur-containing compound include mercaptobenzimidazole-based compounds such as 2-mercaptobenzimidazole and 2-mercaptomethylbenzimidazole; mercaptobenzothiazole-based compounds such as 2-mercaptobenzothiazole, a cyclohexylamine salt of 2-mercaptobenzothiazole, dibenzothiazyl disulfide, 2-(N,N'-diethylthiocarbamoylthio)benzothiazole, 2-(4'-morpholinodithio)benzothiazole, N-cyclohexyl-2-benzothiazolylsulfenamide, N-oxydiethylene-2-benzothiazolylsulfenamide, N-tert-butyl-2-benzothiazolylsulfenamide, N,N'-dicyclohexyl-2-benzothiazolylsulfenamide and N,N'-diisopropylbenzothiazole-2-sulphene; mercaptoimidazoline-based compounds such as 2-mercaptoimidazoline; and dithiocarbamic acids such as pentamethylenedithiocarbamic acid, pipecolyldithiocarbamic acid, dimethyldithiocarbamic acid, diethyldithiocarbamic acid, dibutyldithiocarbamic acid and N-ethyl-N-phenyldithiocarbamic acid, each of which may be in the form of a salt thereof with a metal such as a Zn, Sn, Cd, Cu or Fe or an organic salt thereof such as a piperidine salt or a pipecolyl salt thereof.

Examples of the organic sulfur-containing compound include thiuram-based compounds, for example, thiuram monosulfides such as tetramethylthiuram monosulfide; thiuram disulfides such as tetramethylthiuram disulfide, tetraethylthiuram disulfide and tetrabutylthiuram disulfide; and other thiuram-based compounds such as dipentamethylenethiuram tetrasulfide.

The organic sulfur-containing compound is also preferably, for example, thiourea in which at least one hydrogen atom bonded to a nitrogen atom constituting the thiourea may be replaced by a saturated or unsaturated hydrocarbon group having 1 to 6 carbon atoms, and it may be thiourea, a thiourea derivatives such as N,N'-diethylthiourea, N,N'-dibutylthiourea, dilaurylthiourea or N,N'-diphenylthiourea, and the like.

The heat stabilizer is particularly preferably an aromatic ring-containing compound and more preferably an aromatic amine, a mercaptobenzothiazole-based compound and a mercaptobenzimidazole-based compound, because the heat stabilizer is required to have stability at a high temperature not less than the temperature near the melting point of the meltable fluororesin contained in the powdery primer composition of the present disclosure or the meltable fluororesin coating material, for example at a high temperature of about 250°C or more.

The heat stabilizer can be produced by any conventionally known method, but may usually be a commercially available product.

The heat stabilizer may be used alone or in combination of two or more thereof. When two or more heat stabilizers are used in combination, the mass thereof is the total mass of all heat stabilizers combined.

When the heat stabilizer is contained in the powdery primer composition of the present disclosure, the content of the heat stabilizer is preferably 0.001 to 5% by mass based on the solid content of the meltable fluororesin powder, from the viewpoint of heat stabilization effect and prevention of foaming caused by its decomposition. The lower limit thereof is more preferably 0.003% by mass, and the upper limit thereof is more preferably 2% by mass.

The primer for meltable fluororesin coating materials of the present disclosure may optionally further comprise an additive. The additive is not limited, and examples thereof include those used in primers for general coating materials. Examples of the additive include a pigment, a filler, a leveling agent, a solid lubricant, a moisture absorber, a surface modifier, a UV absorber, a light stabilizer, a plasticizer, an anti-flooding agent, an anti-scratch agent, an anti-mold agent, an antimicrobial agent, an antioxidant, an antistatic agent and a silane coupling agent.

Specific example of the additive include a coloring pigment such as carbon, titanium oxide, red iron oxide or mica; an anticorrosive pigment, a calcined pigment, an extender pigment, a glittering flat pigment, a flake pigment, wood powder, quartz sand, carbon black, clay, talc, diamond, fluorinated diamond, corundum, silica stone, boron nitride, boron carbide, silicon carbide, fused alumina, tourmaline, jade, germanium, zirconium oxide, zirconium carbide, chrysoberyl, topaz, beryl, garnet, glass, glass powder, mica powder, metal powder (such as gold, silver, copper, platinum, stainless steel or aluminum powder), various reinforcing materials, various extenders and a conductive filler.

The content of the additive is preferably 0 to 10.0% by mass and more preferably 0 to 5.0% by mass, based on the powdery primer composition.

The powdery primer composition of the present disclosure is prepared, for example, by any conventionally known method. For example, the powdery primer composition of the present disclosure can be prepared by mixing the above-described meltable fluororesin powder and polyethersulfone powder and optionally a heat stabilizer or the like with a mixer. The mixer may be, but is not limited to, a conventional V-type blender or a Henschel mixer.

The powdery primer composition of the present disclosure is directed toward forming a primer film to be provided under a film of the meltable perfluoropolymer, and is preferably directed toward forming the primer film to be provided in direct contact with and under the film of the meltable perfluoropolymer. As used herein, the phrase "under the film of the meltable perfluoropolymer" means between the film of the meltable perfluoropolymer and an object to be coated (substrate). The meltable perfluoropolymer film will be described later.

The powdery primer composition of the present disclosure is also preferably applied directly on the object to be coated.

The primer film can be formed by applying the powdery primer composition of the present disclosure on an object to be coated and, as appropriate, then heating it.

The object to be coated is not limited as long as the film of the meltable perfluoropolymer can be formed thereon.

The powdery primer composition of the present disclosure is preferably applied directly on a substrate made of a metallic or non-metallic inorganic material or applied on a layer formed of a heat-resistant resin (hereinafter also referred to as a heat-resistant layer), and more preferably directly applied on the substrate made of a metallic or non-metallic inorganic material.

Examples of the metal include an elemental metal such as iron, aluminum or copper, and an alloy thereof. Examples of the alloy include stainless steel (SUS). Examples of the non-metallic inorganic material include enamel, glass and ceramics. The substrate may comprise the other material(s) in addition to the metallic or non-metallic inorganic material.

The substrate is preferably made of a metal, and more preferably aluminum or stainless steel.

The powdery primer composition of the present disclosure is particularly suitable for use in coating a metal substrate. Specific examples of the metal substrate include parts related to industrial applications such as piping, pipes and ducts. The powdery primer composition is applied on the inner surface thereof. It is advantageous to apply the powdery primer composition of the present disclosure to the metal substrate, in that a high adhesion can be ensured.

The object to be coated may be optionally previously subjected to surface treatment such as cleaning or sandblasting. The sandblasting is blowing sand such as silica sand or alumina powder, and it roughens the surface of the object to be coated. Therefore, the object to be coated is preferably subjected to the sandblasting from the viewpoint of improvement in adhesion.

The method of application to the object to be coated is not limited, but it can be appropriately selected depending on the form of the object to be coated or the like. Examples thereof include any conventionally known method such as electrostatic coating. The application can be performed so that the dry film thickness is 20 to 150 µm. The application may be performed while heating, and it may be performed for example, at 60 to 120°C.

The present disclosure also relates to a primer film formed from the powdery primer composition of the present disclosure.

The primer film of the present disclosure is excellent in adhesion to the object to be coated and the film of the meltable perfluoropolymer.

The thickness of the primer film is suitably a 20 to 150 µm, and more preferably 50 to 100 µm.

A meltable perfluoropolymer coating material can be applied on the primer film followed by heating and baking to form a meltable perfluoropolymer film.

The present disclosure is also a laminate having a film comprising a meltable perfluoropolymer provided on the primer film.

The meltable perfluoropolymer coating material comprises, but is not limited to, a meltable perfluoropolymer as a main component and optionally the other component(s) such as an additive as appropriate.

The meltable perfluoropolymer used in the above-described meltable perfluoropolymer coating material is more preferably those obtained by copolymerizing tetrafluoroethylene as a comonomer with the above-described perfluoromonomer as another comonomer that is not limited.

It may also be of the same type as or the different type from the meltable fluororesin in the powdery primer composition.

The meltable perfluoropolymer coating material is preferably a powder coating material. The method for producing the powder coating material is not limited, and examples thereof include any conventionally known methods. The method can be a method of milling after optionally melting and kneading the meltable perfluoropolymer and the other component(s); and a method in which milling and classifying are performed by the method described above for the method of milling the meltable perfluoropolymer powder; or the like.

However, if the method of producing a powder coating material via the step of spray-drying a liquid dispersion of fluororesin particles is performed, a surfactant for stabilizing the liquid dispersion may remain in the powder coating material and also in the film formed by applying it. Such a method is not preferable because the resulting perfluoropolymer film is impaired in heat resistance and chemical resistance.

The powder coating material can be used as a powder coating material for forming a thin film, generally having a thickness of 20 to 100 µm, by an electrostatic coating method; a powder coating material for forming a thick film, generally having a thickness of 100 to 1500 µm, by an electrostatic coating method; a powder coating material for forming a thick film, generally having a thickness of 1000 to 5000 µm, by a rotolining method; or the like. In order to obtain a thick film by an electrostatic coating method, the step of applying the powder coating material to an object to be coated followed by heating and baking to form a film is often repeated two or more times.

The meltable perfluoropolymer contained in the powder coating material for forming a thin film by an electrostatic coating method preferably has an average particle size of 5 to 50 µm. If the average particle size is less than 5 µm, electrostatic repulsion is likely to occur during application and thereby tends to be difficult to obtain a smooth film. If the average particle size is more than 50 µm, it also tends to be difficult to obtain a smooth film. The average particle size is more preferably in the range of 10 to 40 µm.

The meltable perfluoropolymer contained in the powder coating material for forming a thick film by an electrostatic coating method preferably has an average particle size of 20 to 100 µm. If the average particle size is less than 20 µm, it tends to be difficult to obtain a thick film. If the average particle size is more than 100 µm, the coating efficiency tends to decrease. The average particle size is more preferably in the range of 30 to 90 µm.

The meltable perfluoropolymer contained in the powder coating material for forming a thick film by a rotolining method preferably has an average particle size of 150 to 500 µm. If the average particle size is less than 150 µm or more than 500 µm, air bubbles tend to remain in the film, making it difficult to obtain a smooth film. The average particle size is more preferably in the range of 200 to 450 µm.

The average particle size of the powder coating material is a value as measured by a laser diffraction method. Specifically, it is a volume median particle size as measured with a particle size distribution measuring device [trade name: Microtrac MT-3300II].

The powder coating material used in the present disclosure can be used for various intended uses as a corrosion-resistant lining or the like, for example, by applying it to an object to be coated followed by heating and baking to form a film. The powder coating material used in the present disclosure can be a powder coating material suitable for the above-described coating method and for obtaining the above-described film thickness after baking by adjusting the average particle size, the melt flow rate or the like as described above within the scope of the present disclosure.

The present disclosure also relates to a coated article having, provided on an object to be coated, a laminate comprising a primer film of the present disclosure formed on the object to be coated and a meltable perfluoropolymer film formed on the primer film.

The coated article of the present disclosure is excellent in adhesion between the primer film and both of the object to be coated and the meltable perfluoropolymer film. Blisters are also inhibited from occurring in the laminated coating film.

In particular, the present disclosure is also a coated article having the above-described laminate provided on a metal substrate. The coated article is preferably a coated article having the above-described laminate provided on the inner surface of a metal substrate such as piping, a pipe or a duct.

The object to be coated, the primer film and the meltable perfluoropolymer film are as described above.

In the coated article of the present disclosure, the object to be coated is preferably in direct contact with the primer film. In addition, the primer film is preferably in direct contact with the meltable perfluoropolymer film. Another layer may be further provided on the meltable perfluoropolymer film, but the meltable perfluoropolymer film is preferably the outermost layer.

### Examples

The present invention will be specifically described based on Examples below.

In the following Examples, "parts" and "%" represent "parts by mass" and "% by mass", respectively, unless otherwise specified.

### (Example 1)

700 g of PFA powder (A) (MFR: 27 g/10 min; average particle size: 38 µm) was mixed with 300 g of polyethersulfone powder (average particle size: 10 µm) to obtain a PFA powdery primer composition.

A degreased SUS304 substrate (200 mm × 200 mm × 1.5 mm) was subjected to blasting with Tosa Emery (manufactured by Ujiden Chemical Industry Co., Ltd.) as 80 mesh alumina at a pressure of 0.5 MPa, and the blasted powder was removed with air. Thereafter, the PFA powdery primer composition obtained above was coated on the substrate by electrostatic powder coating so that the film thickness was 30 to 50 µm, and baked at 350°C for 30 minutes.

Next, the process of electrostatically coating with a PFA powder coating material (MFR: 27 g/10 min; average particle size: 38 µm) and baking at 350°C for 30 minutes was repeated to obtain a coated article having a coating film thickness of about 300 µm provided thereon.

This coated article was subjected to a permeation test using a Yamazaki lining tester (a test liquid: pure water; internal temperature: 100°C, external temperature: 20°C; test time: 24 hours) to evaluate it for the proportion of the area of the coating film in which blisters occurred.

### (Example 2)

A FEP powdery primer composition was obtained in the same manner as in Example 1 except that FEP powder (MFR: 19 g/10 min; average particle size: 45 µm) was used instead of the PFA powder (A).

Then, a coated article was prepared in the same manner as in Example 1 except that an FEP powder coating material (MFR: 19 g/10 min; average particle size: 45 µm) was used instead of the PFA powder coating material, and the coated article was evaluated for the proportion of the area of the coating film in which blisters occurred.

### (Example 3)

A PFA powdery primer composition was obtained in the same manner as in Example 1 except that 50 g of calcium carbonate powder (average particle size: 1 µm) was further added and mixed to the PFA powder primer composition obtained in Example 1. Then, a coated article was prepared in the same manner as in Example 1 and evaluated for the proportion of the area of the coating film in which blisters occurred.

### (Example 4)

A FEP powdery primer composition was obtained in the same manner as in Example 1 except that FEP powder (MFR: 19 g/10 min; average particle size: 45 µm) was used instead of the PFA powder (A) and 50 g of barium sulfate powder (average particle size: 1 µm) was further added and mixed.

Then, a coated article was prepared in the same manner as in Example 1 except that an FEP powder coating material (MFR: 19 g/10 min; average particle size: 45 µm) was used instead of the PFA powder coating material, and the coated article was evaluated for the proportion of the area of the coating film in which blisters occurred.

### (Example 5)

A PFA powdery primer composition was obtained in the same manner as in Example 1 except that PFA powder (B) (MFR: 24 g/10 min; average particle size: 17 µm) was used instead of the PFA powder (A) (MFR: 27 g/10 min; average particle size: 38 µm).

Then, a coated article was prepared in the same manner as in Example 1 and evaluated for the proportion of the area of the coating film in which blisters occurred.

### (Example 6)

A PFA powdery primer composition was obtained in the same manner as in Example 1 except that PFA powder (C) (MFR: 6 g/10 min; average particle size: 32 µm) was used instead of the PFA powder (A) (MFR: 27 g/10 min; average particle size: 38 µm).

Then, a coated article was prepared in the same manner as in Example 1 and evaluated for the proportion of the area of the coating film in which blisters occurred.

### (Example 7)

A PFA powdery primer composition was obtained in the same manner as in Example 1 except that PFA powder (D) (MFR: 46 g/10 min; average particle size: 33 µm) was used instead of the PFA powder (A) (MFR: 27 g/10 min; average particle size: 38 µm).

Then, a coated article was prepared in the same manner as in Example 1 and evaluated for the proportion of the area of the coating film in which blisters occurred.

### (Comparative Example 1)

A PFA powdery primer composition was obtained in the same manner as in Example 1 except that polyamideimide powder (acid value: 80 mg KOH/g; average particle size: 20 µm) was used instead of polyethersulfone powder.

Then, a coated article was prepared in the same manner as in Example 1 and evaluated for the proportion of the area of the coating film in which blisters occurred.

### (Comparative Example 2)

A PFA powdery primer composition was obtained in the same manner as in Example 1 except that polyamideimide powder (acid value: 80 mg KOH/g; average particle size: 20 µm) and polyphenylene sulfide powder (MFR in accordance with ASTM D1238: 5000 g/10 min; average particle size: 35 µm) was used instead of polyethersulfone powder.

Then, a coated article was prepared in the same manner as in Example 1 and evaluated for the proportion of the area of the coating film in which blisters occurred.

### (Comparative Example 3)

400 g of PFA powder (A) (MFR: 27 g/10 min; average particle size: 38 µm) was mixed with 600 g of polyethersulfone powder (average particle size: 10 µm) to obtain a PFA powdery primer composition.

Thereafter, a coated article was prepared in the same manner as in Example 1 and evaluated for the proportion of the area of the coating film in which blisters occurred.

### (Comparative Example 4)

970 g of PFA powder (A) (MFR: 27 g/10 min; average particle size: 38 µm) was mixed with 30 g of polyethersulfone powder (average particle size: 10 µm) to obtain a PFA powdery primer composition.

Thereafter, a coated article was prepared in the same manner as in Example 1 and evaluated for the proportion of the area of the coating film in which blisters occurred.

**[Table 1]**

| | Meltable fluororesin | | | Binder resin | | Ratio [fluororesin /binder resin] | Additive | Meltable fluororesin in topcoat | | | Evaluation by lining tester |
|---|---|---|---|---|---|---|---|---|---|---|---|
| | Resin | MFR (g/10min) | Average particle size (µm) | Resin | Average particle size (µm) | | | Resin | MFR (g/10min) | Average particle size (µm) | Area of blisters after 100°C ×24 hr immersion (%) |
| Example 1 | PFA | 27 | 38 | PES | 10 | 713 | - | PFA | 27 | 38 | 8.0% |
| Example 2 | FEP | 19 | 45 | PES | 10 | 7/3 | - | FEP | 19 | 45 | 8.5% |
| Example 3 | PFA | 27 | 38 | PES | 10 | 7/3 | Calcium carbonate | PFA | 27 | 38 | 7.9% |
| Example 4 | FEP | 19 | 45 | PES | 10 | 773 | Barium sulfate | FEP | 19 | 45 | 7.4% |
| Example 5 | PFA | 24 | 17 | PES | 10 | 7/3 | | PFA | 27 | 38 | 9.2% |
| Example 6 | PFA | 6 | 32 | PES | 10 | 713 | - | PFA | 27 | 38 | 9.8% |
| Example 7 | PFA | 46 | 33 | PES | 10 | 713 | - | PFA | 27 | 38 | 11.3% |
| Comparative Example 1 | PFA | 27 | 38 | PAI | 43 | 7/3 | - | PFA | 27 | 38 | 13.7% |
| Comparative Example 2 | PFA | 27 | 38 | PAKPPS | PAI : 20 PPS:35 | 7/3 | - | PFA | 27 | 38 | 12.9% |
| Comparative Example 3 | PFA | 27 | 38 | PES | 10 | 416 | - | PFA | 27 | 38 | 12.5% |
| Comparative Example 4 | PFA | 27 | 38 | PES | 10 | 9713 | - | PFA | 27 | 38 | 14.0% |

### Industrial Applicability

Since the powdery primer composition of the present disclosure has the features described above, it inhibits blisters from occurring in a laminated coating film. It is particularly suitable as a powdery primer composition for a metal substrate.

## Claims

1. A powdery primer composition, comprising a meltable fluororesin powder having an average particle size of 5 to 100 µm; and polyethersulfone powder,
wherein the weight ratio between the meltable fluororesin powder and the polyethersulfone powder is 50:50 to 95:5.

2. The powdery primer composition according to claim 1, wherein the meltable fluororesin has a melt flow rate of 0.1 to 50 g/10 min.

3. The powdery primer composition according to claim 1 or 2, wherein the meltable fluororesin is a perfluoropolymer.

4. A primer film formed from the powdery primer composition according to any one of claims 1 to 3.

5. A laminate having a film comprising a meltable fluororesin provided on the primer film according to claim 4.

6. A coated article having the laminate according to claim 5 provided on a metal substrate.

7. A coated article having the laminate according to claim 5 on the inner surface of a metal substrate, wherein the metal substrate is piping, a pipe or a duct.
